# EUROPEAN PATENT SPECIFICATION

(11) **EP 2 125 437 B1**
(45) Date of publication and mention of the grant of the patent: **17.11.2010**
(21) Application number: 08706357.4
(22) Date of filing: 12.02.2008
(51) Int. Cl.: B60R 13/08

(54) **CONSTRAINED LAYER DAMPING FOR VEHICLE**
DÄMPFER MIT EINGESCHLOSSENER SCHICHT FÜR FAHRZEUG
AMORTISSEMENT D'UN VÉHICULE PAR UTILISATION D'UNE COUCHE CONTRAINTE

(30) Priority: 12.02.2007 EP 07002904
(43) Date of publication of application: 02.12.2009
(73) Proprietor: Rieter Technologies AG, 8406 Winterthur (CH)
(72) Inventor: MANTOVANI, Maurizio, CH-8542 Wiesendangen (CH); ROTH, Harald, 1237 Capital Federal Buenos Aires (AR); LEHMANN, Dirk, CH-8525 Niederneunforn (CH)
(86) International application number: PCT/CH2008/000052
(87) International publication number: WO 2008/098395

(56) References cited:
- WO-A-01/89883
- WO-A-99/24290
- WO-A-2006/021004
- WO-A-2007/134391

## Description

The present invention concerns a vibration damper for application to a vehicle bottom plate, comprising an under floor panel as a constraining layer and a damping layer as a constrained layer, wherein the damping layer has a lower modulus of elasticity than the under floor panel, and wherein the damping layer is located between the vehicle bottom plate and the under floor panel when the vibration damper is fixed to the vehicle bottom plate. In addition, the invention also relates to a damping arrangement and a method to produce such a vibration damper.

Modern car industry more and more provides the bottom plate of the cars with under floor panels in order to protect the aggregates and components, which are mounted directly underneath the bottom plate, against physical and chemical damages, such as stones and salt. These under floor panels are usually made of plastics material and may comprise reinforcing additives, such as glass fibres. Additionally, these under floor panels are used to diminish the aerodynamic resistance of the vehicle and/or to manage the heat flow directly underneath the bottom plate or underneath the motor compartment and/or to reduce the noise emission and/or transmission. Unfortunately, these light-weight under floor panels tend to vibrate and generate undesired noise.

In order to overcome these deficiencies, EP-A-1520772 proposes to provide such an under floor panel with an additionally elastic material. This elastic material is arranged between the under floor panel and the vehicle's bottom plate and allows to combine acoustic and aerodynamic properties. In particular, this configuration is acoustically behaving in accordance with a classical spring-mass system, wherein the under floor panel is behaving as the mass and the elastic material as the spring. Such spring-mass systems are well known in the art and widely used for acoustic insulations. The disclosed configuration further allows to locally compress the elastic material in order to damp vibrations of the under floor panel. Unfortunately, the local compression of the elastic material reduces the damping performance of the acoustic system at the same time. It appears that this kind of under floor construction has a limited acoustic performance.

Similar disadvantages are also known from all kinds of single-layer dampers, in particular sprayable dampers, which require a rather thick deposit of damper material in order to exhibit a sufficient damping effect. This results in an undesired increase of the weight of the bottom plate and obviously causes additional assembly work and increased assembly costs.

It is also known from EP-A-0077987 to use a constrained three-layer type damper for panels of automotive bodies, in particular for a metallic floor panel. This constrained damper comprises a meltable bonding layer, a viscoelastic layer and a constraining layer laminated such that the viscoelastic layer is intimately sandwiched between the bonding layer and the constraining layer. The constraining layer of this damper is formed of a resin composition comprising an uncured thermosetting resin and an inorganic filler. However, it is not possible to easily adjust and/or optimise the damping performance of this damper.

Document WO 99/24290 A1 discloses a vibration damper according to the preamble of claim 1. It is important for the effectiveness of the damping mechanism of a constrained layer damper that during vibration the shear forces within the damping layer are increased and thus an important amount of energy is additionally dissipated.

It is the object of present invention to present a vibration damper and a vibration damping arrangement for an under floor panel, which is lightweight and simple to manufacture, which is simple to assemble and which exhibits an advanced and easy to optimise vibration damping performance.

This object is achieved by the initially mentioned vibration damper in which the under floor panel is pre-shaped and stays in this shape when fixed to the vehicle bottom plate and is made of a first polymeric material, and in which the damping layer is made of a non-foamy second polymeric or bitumen material and is placed on the under floor panel prior to fixation of the vibration damper to the vehicle bottom plate. The damping arrangement according to the invention comprises a vehicle bottom plate and such a vibration damper, which together form a constrained layer damper. The stiffness, the loss factor and the thickness of the different layers are locally adjusted in order to optimise the overall damping performance.

In addition, the above-mentioned object is achieved by a corresponding method for producing such a vibration damper as outlined in the method claim.

For fixing the damping layer onto the vehicle bottom plate, advantageously an adhesive is placed upon the damping layer. Preferably, the adhesive is not a meltable bonding layer. Also, the adhesive advantageously exhibits a high shear stiffness in order not to disturb the effectiveness of the vibration damping; the damping effect may even be enhanced or tuned by the adhesive.

An adhesive can also be used for bonding the under floor panel to the damping layer, where this adhesive likewise has high shear stiffness.

To optimize the constrained damping effect, the under floor panel preferably is made of a stiff material in order to induce shear strains in the damping layer during vibration, wherein the under floor panel is made of a fibre reinforced or non-reinforced thermoplastic, in particular pure polymer fibres or blends of glass and polymer fibres. The panel may also be made by using thermoplastics, especially polypropylene or a polyamide, filled with porous glass spheres. According to one alternative, the under floor panel is made of an injection moulded PP, or a combination of the aforementioned materials.

For example, the under floor panel according to invention can be manufactured by injection moulding. According to one alternative, the under floor panel is made by a direct compounding method.

One preferred under floor panel is made of a glass fibre reinforced material, especially polypropylene or a polyamide.

According to another advantageous alternative, the under floor panel according to the invention is made of natural fibre reinforced material, especially polypropylene or a polyamide. Such natural fibres, which proved to be very suitable, are preferably selected from the group of banana plant, jute, hemp, kenaf, flax, nutshell. The recycling of the vibration damper according to the invention is improved considerably by using natural fibres.

The inventors have found that the under floor panel according to some embodiments of the invention is advantageously made from a thermoplastic which is reinforced by fibres being smaller than 25 mm. In particular, the length of the fibres may be between 1 and 25 mm and more preferably between 10 and 25 mm. In some embodiments, the preferred average fibre length is greater than 10 mm, and - according to some embodiments - is about 20 mm. Moreover, it has been found out that according to some embodiments it is preferred to adjust the degree of fibre filling of the under floor panel between 10 and 50 percent by weight.

In some embodiments, the preferred mass per unit area of the under floor panel according to the invention lies between 1200 and 2500 g/m². The preferred thickness of the under floor layer is between 1 and 3 mm, preferably between 1.2 and 2.5 mm and more preferably between 1.3 and 2.0 mm.

The above parameters advantageously lead to an under floor panel which has a module of elasticity higher than 2000 N/mM², measured according to the Oberst method (DIN EN ISO 6721).

Likewise, the damping material has an important impact on the physical properties of the vibration damper according to the invention. Preferably, the damping material exhibits high adhesion and/or cohesion forces, and is chosen from butyl rubber, sprayable bituminous damper, bitumen mastic, or comprises a pressure sensitive adhesive foil. Alternative materials for the damping layer are standard bitumen / bituminous damping foil, a butyl rubber foil, a bituminous heavy layer, or a combination of some of the aforementioned materials in order to form a layered construction. Herein, the term "bitumen" is used for modified bitumen such that this bitumen material is adapted to have the desired damping properties. The term "bitumen", therefore, includes bitumen material with appropriate fillers, including polymeric modifiers resulting in a polymer-modified bitumen.

In some embodiments, the damping layer preferably has a mass per unit area between 1000 and 4000 g/m² and - according to some embodiments - between 2500 and 4000 g/ m². Also, the damping layer according to some embodiments preferably exhibits a thickness being between 1.0 and 4 mm.

In some embodiments, the loss factor of the damping layer is preferably adjusted to be greater than 0.1 in a temperature range of Delta T = 40°C, measured according to the Oberst method (DIN EN ISO 6721). The shear module at 200 Hz is preferably adjusted to be between 1_{*}10⁵ and 1_{*}10⁸ Pa in a temperature range of -20°C to 80°C.

In some embodiments, the vibration damper, comprising the under floor panel and the damping layer, preferably exhibits a loss factor of greater than 0.15 in a temperature range of Delta T = 60°C, measured according to the Oberst method (DIN EN ISO 6721).

One preferred material choice, which resulted in such a very effective vibration damper, is PP (polypropylene) with a glass fibre content of 0 - 50 % for the under floor panel and bitumen or butyl rubber for the damping layer. With such materials, the above-mentioned value regarding the loss factor have been measured.

According to an advantageous embodiment, the damping layer comprises a locally varying thickness such that it can follow the shape of the floor structure or is assembled of patches with different thickness.

One embodiment is **characterised in that** the damping layer is perforated in order to allow compression in z-direction, i.e. expansion of the damping material in x,y-direction, during mounting of a strip of a mastic material.

According to one embodiment, areas not covered by the damping layer may exist. In these areas, the under floor panel may be perforated or the under floor panel is replaced by an absorber material. Particularly, this absorber material can be made from a fibre reinforced or non-reinforced thermoplastic fibres material, and in particular from pure polymer fibres or blends of glass and polymer fibres.

The damping arrangement according to the invention comprises a vehicle bottom plate and a vibration damper as described above. The thickness, the loss factor and the stiffness of the layers are optimised with respect to the vibration damping performance.

According to one respective embodiment, the damping layer does not cover all of the space between the bottom plate and the under floor panel, but partially leaves a free space. This free space may be filled instead at least partially with an absorber material, in particular with foam, fibres material, fibre layer stacks, polymer foils, air, or similar.

Although in the preferred embodiment, the damping layer is attached or glued directly to the under floor panel, another advantageous embodiment suggests that a spacer is arranged between the under floor panel and the vehicle bottom plate. This spacer may be located between the under floor panel and the damping layer, or between the damping layer and the vehicle bottom plate. The spacer assures a given distance between the vehicle bottom plate and the under floor panel, wherein the spacer is made from a lightweight material, e.g. a close-cell foam, or is formed by the constraining layer itself.

According to a further embodiment, an insertion layer is arranged on the outside of the under floor panel in order to smooth out the outer shape of this under floor panel, wherein the insertion layer is made of a lightweight material, e.g. absorber material, or is made by the under floor panel material itself.

All of the above embodiments integrate the under floor panel into a constrained damping layer arrangement, which allows to optimise the vibration damping performance of the whole arrangement in view of the thickness, the loss factor and the stiffness of the different layers. This leads to a strong improvement of the damping performance for any given choice of materials and for any given specification. It is an additional advantage of the integrated vibration damping arrangement that the noise in the interior of the vehicle is further reduced.

In order to exemplify the invention reference is made to the following figures, wherein the different layers have properties as discussed above and are made of the described materials:
- Figure 1:: a schematic and cross sectional view of a vehicle bottom plate comprising a constrained layer damping arrangement according to the invention;
- Figures 2 - 6:: schematic and cross sectional views of a vibration damper and damping arrangements in accordance with the invention comprising different designs;
- Figures 7 - 11:: schematic and cross sectional view of damping arrangements in accordance with the invention comprising different designs of the damping layer, and
- Figures 12 - 14:: schematic and cross sectional views of damping arrangements in accordance with the invention comprising different designs for an arrangement with varying thicknesses.

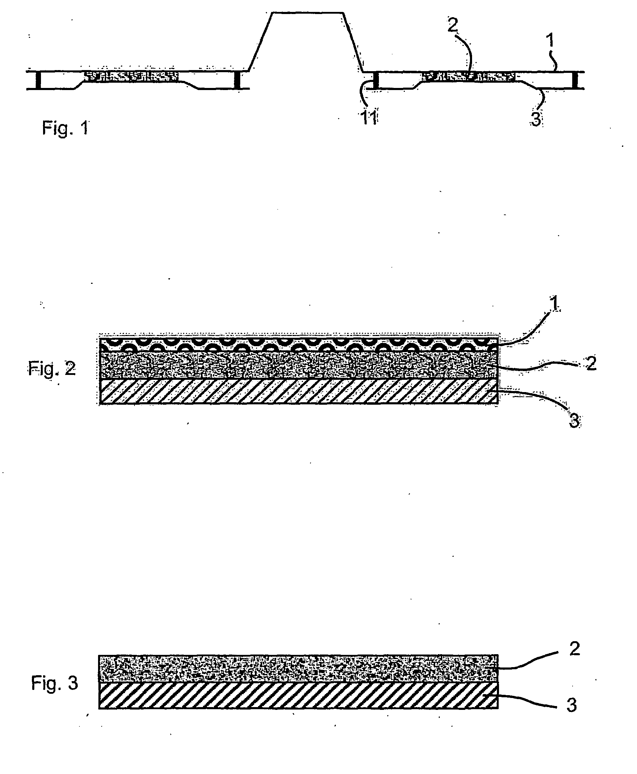

Figure 1 shows a schematic and cross sectional view of a damping arrangement in accordance with the invention. This arrangement comprises a vehicle bottom plate 1, an under floor panel 3 acting as a constraining layer, and a damping layer 2 in between acting as a constrained layer. These layers 1, 2, 3 are forming a constrained layer damper. The under floor panel 3 is spaced and affixed to the vehicle bottom plate 1 by fasteners 11, which do not exhibit particular compression forces to the constrained layer damper. Such fasteners may be, for example, clips, pins, screws, etc. Figure 2 shows the damping arrangement consisting of the vehicle bottom plate 1, the damping layer 2 and the under floor panel 3 in a magnified view. The vibration damper according to the invention and displayed in Figure 3 consists in this example of the under floor panel 3 and the damping layer 2 prior to fixation to the vehicle bottom plate 1.

It is advantageous that the damping material exhibits high adhesion and/or cohesion forces in order to assure an adequate surface-to-surface bond. This material (also in respective combinations) is preferably chosen from butyl rubber, sprayable bituminous damper, a bitumen mastic, or is comprising a pressure sensitive adhesive foil.

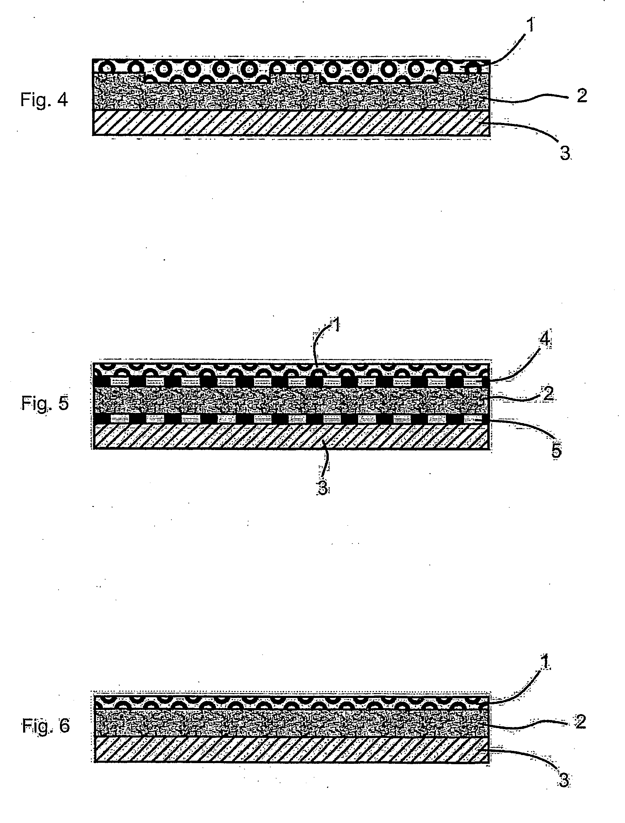

Figure 4 shows a damping arrangement, wherein the damping layer 2 comprises a locally varying thickness in order to follow the shape of the bottom plate 1. It should be borne in mind that the damping layer 2 may be assembled of patches with different thickness.

Figure 5 shows a damping arrangement, wherein the bonding between the different layers is achieved by different adhesives 4, 5, which have high shear stiffness. Due to the adhesives 4, 5, the number of usually needed fasteners 11 can be considerably reduced. Even embodiments without fasteners at all are possible if appropriate adhesives are used.

The damping arrangement shown in Figure 6 comprises a constraining layer material 3, which is made of a stiff material in order to exhibit - during vibration - shear strains in the damping layer 2. The constraining layer 3 is preferably made of a fibre reinforced or non-reinforced thermoplastic fibres material and in particular of a glass fibres or natural fibres reinforced polypropylene material, blends of glass and polymer fibres, pure polymer fibres, an injection moulded PP (polypropylene) material, or a combination of these materials. The fibres advantageously exhibit the above-mentioned properties with respect to length and are made of above-mentioned materials. Special materials for the under floor panel are, e.g., described in W02001/40025. A lightweight reinforced thermoplastic, which is well known in the art, is described in "Advanced glass-mat thermoplastic composite applications for the automotive industry" of January 2006 from Quadrant Plastic Composites. Other well-suited materials are described in WO2004/088025 and DE102006035361.

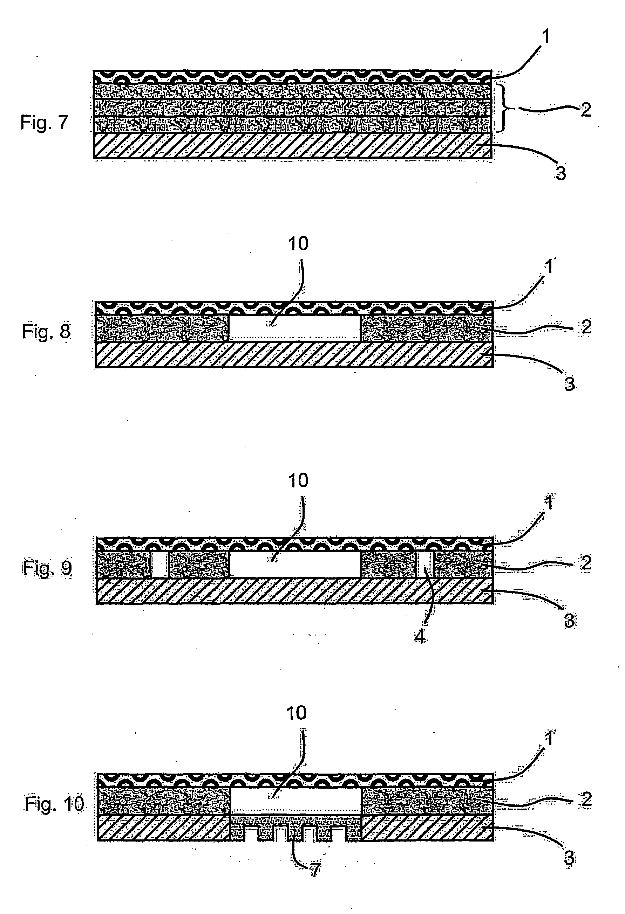

The damping arrangement shown in Figure 7 is a layered construction in accordance with the invention, wherein the damping layer 2 is made of layers of standard bitumen damping foil, butyl rubber, butyl rubber foil, bituminous heavy layer, bitumen mastic, sprayable bituminous damper, or a combination of these materials.

Figure 8 shows a damping arrangement, wherein the under floor panel 3 is partially covered by the damping layer 2 and a space 10 is created between the under floor panel 3 and the bottom plate 1.

Figure 9 shows a damping arrangement, wherein the damping layer 2 is perforated in order to allow compression in z-direction (or an expansion of the damping material in x,y-direction) during mounting of a strip of mastic.

Figure 10 shows a damping arrangement, wherein the layer 3 is replaced at one location by an absorber material 7, in particular by a material, which consists of a blend of glass and polymer fibres or pure polymer fibres, at areas which are not covered by the damping material 2.

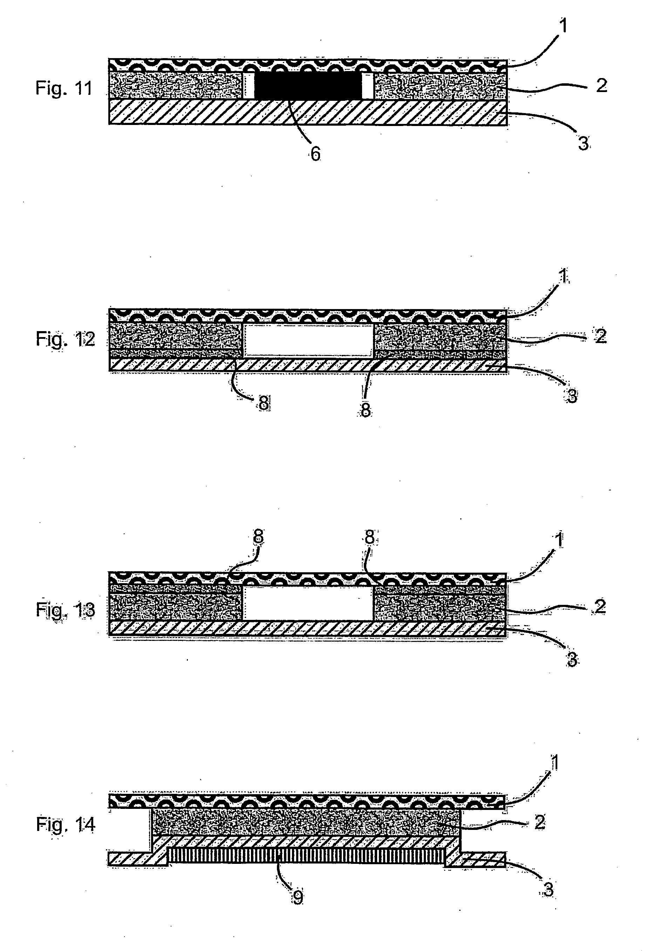

Figure 11 shows a damping arrangement, wherein the free space 10 between the bottom plate 1 and the under floor panel 3 is filled with an absorber material 6, in particular with fibres material and/or fibre layer stacks (including textile material), foam, foam chambers, polymer foils, air or similar. Fibre layer stacks or polymer foils are well known in the art and for example described in WO2005/023594 or WO2006/105933.

Figure 12 shows a damping arrangement, wherein a spacer 8 is arranged on the constraining layer 3 in the damped area in order to assure a given distance between the under floor panel 3 and the bottom plate 1. The spacer 8 preferably is a lightweight material, e.g. a close-cell foam, or is formed by the constraining layer itself.

The damping arrangement shown in Figure 13 comprises a spacer 8 between the damping layer 2 and the vehicle bottom plate 1 to assure a given distance between the bottom plate 1 and the under floor panel 3. Preferably, the spacer 8 is made of a lightweight material, e.g. a close-cell foam, or is made from the bottom plate material.

Figure 14 shows a damping arrangement, wherein an insertion layer 9 is arranged on the outside of the under floor panel 3 in order to smooth out the outer shape of the under floor panel 3, wherein this insertion layer 9 is made of lightweight material, e.g. absorber material, or is made from the under floor panel material itself.

## Claims

1. A vibration damper for application to a vehicle bottom plate (1), comprising a constraining layer, which is made of a first polymeric material and a damping layer (2), which is made of a non-foamy second polymeric or bitumen material, as a constrained layer, and wherein the damping layer (2) has a lower modulus of elasticity than the constraining layer **characterized in that** the constrained layer is an under floor panel (3), which is pre-shaped and stays in this shape when fixed to the vehicle bottom plate (1), and wherein the damping layer (2) is located between the vehicle bottom plate (1) and the under floor panel (3), when the vibration damper is fixed to the vehicle bottom plate (1), and wherein the under floor panel (3) is made of a fibre reinforced or non-reinforced thermoplastic.

2. Vibration damper according to claim 1, **characterized in that** an adhesive (4) is placed upon the damping layer (2) for gluing the vibration damper onto the vehicle bottom plate (1).

3. Vibration damper according to any of the preceding claims, **characterized in that** the damping layer (2) exhibits a loss factor of greater than 0.1 in a temperature range of Delta T = 40°C, measured according to the Oberst method (DIN EN ISO 6721).

4. Vibration damper according to any of the preceding claims, **characterised in that** the damping layer (2) has a shear modulus at 200 Hz of 1.10⁵ - 1.10⁸ Pa in a temperature range of -20°C to 80°C.

5. Vibration damper according to one of the preceding claims, **characterized in that** the under floor panel (3) is made of a stiff material in order to induce shear strains in the damping layer (2) during vibration.

6. Vibration damper according to any of the preceding claims, **characterized in that** the under floor panel (3) has a thickness between 1 and 3 mm, preferably between 1.2 and 2.5 mm and more preferably between 1.3 and 2.0 mm.

7. Vibration damper according to any of the preceding claims, **characterized in that** the under floor panel (3) has a modulus of elasticity higher than 2000 N/mm², measured according to the Oberst method (DIN EN ISO 6721).

8. Vibration damper according to any of the preceding claims, **characterized in that** the damping material of the damping layer (2) exhibits high adhesion and/or cohesion forces, and is chosen from spray-able bituminous damper, bitumen mastic, a standard bitumen damping foil, a bituminous heavy layer, butyl rubber, a butyl rubber foil, comprises a pressure sensitive adhesive foil, or is a combination of these materials forming a layered construction.

9. Vibration damper according to any of the preceding claims, **characterized in that** the damping layer (2) has a mass per unit area between 1000 and 4000 g/m².

10. Vibration damper according to any of the preceding claims, **characterized in that** the damping layer (2) comprises a locally varying thickness in order to follow the shape of the floor structure or is assembled of patches with different thickness.

11. Vibration damper according to any of the preceding claims, **characterized in that** the damping layer (2) is perforated in order to allow compression in z-direction, i.e. expansion of the damping material in x,y-direction, during mounting of a strip of a mastic material.

12. Vibration damper according to any of the preceding claims, **characterized in that** a space (10) between the bottom plate (1) and the under floor panel (3) is not covered by the damping layer (2)

13. Vibration damper according to claim 12 wherein at areas not covered by the damping layer (2), the under floor panel (3) is perforated or replaced by an absorber material (7), which in particular is made from a fibre reinforced or non-reinforced thermoplastic fibres material, and in particular from pure polymer fibres or blends of glass and polymer fibres.

14. Vibration damper according to any of the preceding claims **characterized in that** an insertion layer (9) is arranged on the outside of the under floor panel (3) in order to smooth out the outer shape of this under floor panel (3), wherein the insertion layer (9) is made of a lightweight material, e.g. absorber material.

15. Use of the vibration damper according to any of the preceding claims applied to a vehicle bottom plate (1) as a constrained damper.

## Patentansprüche

1. Schwingungsdämpfer für ein Fahrzeugbodenblech (1), umfassend eine Versteifungsschicht, die aus einem ersten Polymermaterial besteht, und eine Dämpfungsschicht (2), die aus einem schaumfreien zweiten Polymer- oder Bitumenmaterial besteht, als eingeschlossene Schicht, und wobei die Dämpfungsschicht (2) ein geringeres Elastizitätsmodul als die Versteifungsschicht aufweist, **dadurch gekennzeichnet, dass** die Versteifungsschicht eine Unterbodenplatte (3) ist, die vorgeformt ist und in dieser Form bleibt, wenn sie am Fahrzeugbodenblech (1) befestigt wird, und wobei sich die Dämpfungsschicht (2) zwischen dem Fahrzeugbodenblech (1) und der Unterbodenplatte (3) befindet, wenn der Schwingungsdämpfer am Fahrzeugbodenblech (1) befestigt wird, und wobei die Unterbodenplatte (3) aus einem faserverstärkten oder unverstärkten Thermoplast besteht.

2. Schwingungsdämpfer nach Anspruch 1, **dadurch gekennzeichnet, dass** ein Kleber (4) auf die Dämpfungsschicht (2) aufgebracht ist, um den Schwingungsdämpfer auf das Fahrzeugbodenblech (1) zu kleben.

3. Schwingungsdämpfer nach einem der vorstehenden Ansprüche, **dadurch gekennzeichnet, dass** die Dämpfungsschicht (2) einen Verlustfaktor größer als 0,1 in einem Temperaturbereich von Delta T = 40 °C nach der Oberst-Methode (DIN EN ISO 6721) gemessen aufweist.

4. Schwingungsdämpfer nach einem der vorstehenden Ansprüche, **dadurch gekennzeichnet, dass** die Dämpfungsschicht (2) ein Schermodul bei 200 Hz von 1.10⁵ - 1.10⁸ Pa in einer Temperaturspanne von -20 °C bis 80 °C aufweist.

5. Schwingungsdämpfer nach einem der vorstehenden Ansprüche, **dadurch gekennzeichnet, dass** die Unterbodenplatte (3) aus einem steifen Material besteht, um während der Schwingung Scherbelastungen in die Dämpfungsschicht (2) zu induzieren.

6. Schwingungsdämpfer nach einem der vorstehenden Ansprüche, **dadurch gekennzeichnet, dass** die Unterbodenplatte (3) eine Dicke zwischen 1 und 3 mm aufweist, bevorzugt zwischen 1,2 und 2,5 mm und noch weiter bevorzugt zwischen 1,3 und 2,0 mm.

7. Schwingungsdämpfer nach einem der vorstehenden Ansprüche, **dadurch gekennzeichnet, dass** die Unterbodenplatte (3) ein Elastizitätsmodul höher als 2000 N/mm² nach der Oberst-Methode (DIN EN ISO 6721) gemessen aufweist.

8. Schwingungsdämpfer nach einem der vorstehenden Ansprüche, **dadurch gekennzeichnet, dass** das Dämpfungsmaterial der Dämpfungsschicht (2) hohe Adhäsions- und/oder Kohäsionskräfte aufweist und aus sprühfähigem Bitumendämpfmaterial, Bitumenkitt, einer standardmäßigen Bitumendämpffolie, einer bitumenhaltigen schweren Schicht, Butylgummi, einer Butylgummifolie gewählt wird, eine drucksensitive Klebefolie umfasst oder eine Kombination dieser Materialarten ist und einen Schichtaufbau bildet.

9. Schwingungsdämpfer nach einem der vorstehenden Ansprüche, **dadurch gekennzeichnet, dass** die Dämpfungsschicht (2) eine bereichsbezogene Masse zwischen 1000 und 4000 g/m² aufweist.

10. Schwingungsdämpfer nach einem der vorstehenden Ansprüche, **dadurch gekennzeichnet, dass** die Dämpfungsschicht (2) eine örtlich variierende Dicke umfasst, um der Form der Bodenstruktur zu folgen, oder aus Teilstücken verschiedener Dicke zusammengesetzt ist.

11. Schwingungsdämpfer nach einem der vorstehenden Ansprüche, **dadurch gekennzeichnet, dass** die Dämpfungsschicht (2) perforiert ist, um ein Zusammendrücken in z-Richtung zuzulassen, das heißt Ausdehnung des Dämpfungsmaterials in x, y-Richtung beim Einbau eines Streifens von Kittmaterial.

12. Schwingungsdämpfer nach einem der vorstehenden Ansprüche, **dadurch gekennzeichnet, dass** ein Raum (10) zwischen dem Bodenblech (1) und der Unterbodenplatte (3) von der Dämpfungsschicht (2) nicht abgedeckt wird.

13. Schwingungsdämpfer nach Anspruch 12, wobei in Bereichen, die nicht von der Dämpfungsschicht (2) abgedeckt werden, die Unterbodenplatte (3) perforiert oder durch ein Absorbermaterial (7) ersetzt ist, das insbesondere aus einem faserverstärkten oder nicht verstärkten thermoplastischen Fasermaterial und insbesondere aus reinen Polymerfasern oder Gemischen aus Glas- und Polymerfasern besteht.

14. Schwingungsdämpfer nach einem der vorstehenden Ansprüche, **dadurch gekennzeichnet, dass** eine Zwischenlage (9) an der Außenseite der Unterbodenplatte (3) angebracht ist, um die äußere Form dieser Unterbodenplatte (3) zu glätten, und wobei die Zwischenlage (9) aus einem leichten Material, zum Beispiel einem Absorbermaterial, besteht.

15. Verwendung des Schwingungsdämpfers nach einem der vorstehenden Ansprüche am Fahrzeugbodenblech (1) als eingeschlossener Dämpfer.

## Revendications

1. Amortisseur de vibrations à appliquer au plancher (inférieure) de véhicule (1), comprenant une couche de contrainte qui est réalisée en un premier matériau polymère et une couche d'amortissement (2) qui est réalisée en un deuxième matériau polymère non moussé ou de bitume, comme couche contrainte, et dans lequel la couche d'amortissement (2) a un module d'élasticité inférieur à celui de la couche de contrainte, **caractérisé en ce que** la couche contrainte est un panneau de dessous de caisse (3) qui est pré-formé et reste dans cette forme lorsqu'il est fixé au plancher inférieur de véhicule (1), et dans lequel la couche d'amortissement (2) est' située entre le plancher inférieure de véhicule (1) et le panneau de dessous de caisse (3) lorsque l'amortisseur de vibrations est fixé à plancher inférieure de véhicule (1) et dans lequel le panneau de dessous de caisse (3) est réalisé en un thermoplastique renforcé de fibres ou non renforcé.

2. Amortisseur de vibrations selon la revendication 1, **caractérisé en ce qu'**un adhésif (4) est placé sur la couche d'amortissement (2) pour coller l'amortisseur de vibrations sur plancher inférieure de véhicule (1).

3. Amortisseur de vibrations selon l'une quelconque des revendications précédentes, **caractérisé en ce que** la couche d'amortissement (2) présente un facteur de perte supérieur à 0,1 dans une plage de température Delta T = 40°C, mesuré conformément à la méthode d'Oberst (DIN EN ISO 6721).

4. Amortisseur de vibrations selon l'une quelconque des revendications précédentes, **caractérisé en ce que** la couche d'amortissement (2) a un module de cisaillement à 200 Hz de 1.10⁵ à 1.10⁸ Pa dans une plage de température allant de -20° à 80°C.

5. Amortisseur de vibrations selon l'une quelconque des revendications précédentes, **caractérisé en ce que** le panneau de dessous de caisse (3) est réalisé en un matériau rigide afin de provoquer des contraintes de cisaillement dans la couche d'amortissement (2) au cours de la vibration.

6. Amortisseur de vibrations selon l'une quelconque des revendications précédentes, **caractérisé en ce que** le panneau de dessous de caisse (3) a une épaisseur comprise entre 1 et 3 mm, de préférence entre 1,2 et 2,5 mm et de préférence entre 1,3 et 2,0 mm.

7. Amortisseur de vibrations selon l'une quelconque des revendications précédentes, **caractérisé en ce que** le panneau de dessous de caisse (3) a un module d'élasticité supérieur à 2000 N/mm², mesuré conformément à la méthode d'Oberst (DIN EN ISO 6721).

8. Amortisseur de vibrations selon l'une quelconque des revendications précédentes, **caractérisé en ce que** le matériau d'amortissement de la couche d'amortissement (2) présente de grandes forces d'adhérence et/ou de cohésion et est choisi parmi l'amortisseur bitumineux pulvérisable, le mastic de bitume, la feuille d'amortissement en bitume standard, la couche lourde bitumineuse, le butylcaoutchouc, la feuille en butylcaoutchouc, comprend une feuille adhésive sensible à la pression ou est une combinaison de ces matériaux formant une construction en couches.

9. Amortisseur de vibrations selon l'une quelconque des revendications précédentes, **caractérisé en ce que** la couche d'amortissement (2) a une masse par surface unitaire comprise entre 1000 et 4000 g/m².

10. Amortisseur de vibrations selon l'une quelconque des revendications précédentes, **caractérisé en ce que** la couche d'amortissement (2) a une épaisseur variant localement afin de suivre la forme de la structure du plancher ou est un assemblage de patchs d'épaisseur différente.

11. Amortisseur de vibrations selon l'une quelconque des revendications précédentes, **caractérisé en ce que** la couche d'amortissement (2) est perforée pour permettre une compression dans la direction z, autrement dit une expansion du matériau d'amortissement dans la direction x, y, au cours du montage d'une bande de mastic.

12. Amortisseur de vibrations selon l'une quelconque des revendications précédentes, **caractérisé en ce qu'**un espace (10) entre la plancher inférieure (1) et le panneau de dessous de caisse (3) n'est pas couvert par la couche d'amortissement (2).

13. Amortisseur de vibrations selon la revendication 12, dans lequel aux endroits non couverts par la couche d'amortissement (2), le panneau de dessous de caisse (3) est perforé ou remplacé par un matériau absorbant (7), qui est réalisé en particulier à partir d'un matériau à fibres thermoplastiques renforcé de fibres ou non renforcé, et en particulier à partir de fibres polymères pures ou de mélanges de fibres de verre et de polymère.

14. Amortisseur de vibrations selon l'une quelconque des revendications précédentes, **caractérisé en ce qu'**une couche d'insertion (9) est disposée à l'extérieur du panneau de dessous de caisse (3) afin de lisser la forme extérieure de ce panneau de dessous de caisse (3), la couche d'insertion (9) étant réalisée en un matériau léger, par exemple matériau absorbant.

15. Utilisation de l'amortisseur de vibrations selon l'une quelconque des revendications précédentes appliqué à une plaque inférieure de véhicule (1) sous la forme d'un amortisseur contraint.
